# EUROPÄISCHE PATENTSCHRIFT

(11) **EP 3 632 730 B1**
(45) Veröffentlichungstag und Bekanntmachung des Hinweises auf die Patenterteilung: **26.05.2021**
(21) Anmeldenummer: 18197946.9
(22) Anmeldetag: 01.10.2018
(51) Int. Cl.: B60K 15/04

(54) **VERSCHLUSSDECKEL FÜR EINEN BETRIEBSMITTELTANK**
CLOSURE CAP FOR AN OPERATING LIQUID TANK
COUVERCLE DE FERMETURE POUR UN RÉSERVOIR DE LIQUIDE D'OPÉRATION

(43) Veröffentlichungstag der Anmeldung: 08.04.2020
(73) Patentinhaber: Andreas Stihl AG & Co. KG, 71336 Waiblingen (DE)
(72) Erfinder: GERSTENBERGER, Oliver, 71254 Ditzingen (DE); SCHLESSMANN, Helmut, 73663 Berglen (DE)
(74) Vertreter: Wasmuth, Rolf

(56) Entgegenhaltungen:
- EP-A1- 0 027 970
- DE-A1- 19 700 946
- DE-A1- 19 846 498

## Beschreibung

Die Erfindung betrifft einen Verschlussdeckel für einen Betriebsmitteltank nach dem Oberbegriff des Anspruchs 1.

Aus der DE 197 00 946 A1 ist ein gattungsgemäßer Verschlussdeckel für einen Einfüllstutzen eines Kraftstofftanks bekannt. Er umfasst eine Verschlussvorrichtung aus einem Grundkörper als erstes Deckelelement und einem an dem Grundkörper axial verschiebbar gehaltenen zweiten Deckelelement. Zwischen den beiden Deckelelementen ist ein O-Ring angeordnet, der bei einem relativen Hub zwischen den Deckelelementen durch einen Konusabschnitt eines Deckelelementes in seinem Durchmesser aufgeweitet wird. Dadurch legt sich der Dichtring an einer Dichtschulter im Einfüllstutzen dichtend an. Der Axialhub des Deckelementes wird über eine Hubanordnung bewirkt, die zwischen dem Griffstück des Verschlussdeckels und dem zugewandt liegenden zweiten Deckelelement vorgesehen ist. Durch Drehen des Griffstücks relativ zum zweiten Deckelelement wird ein Hub ausgeführt, der den Konusabschnitt des zweiten Deckelelementes in den Dichtring schiebt und diesen aufweitet.

Dieser eine hohe Betriebssicherheit aufweisende Verschlussdeckel arbeitet störungsfrei; im Laufe der Betriebsdauer können sich jedoch Ablagerungen an der Hubanordnung absetzen, wodurch die Bedienkraft anwachsen kann.

Der Erfindung liegt die Aufgabe zugrunde, einen Verschlussdeckel für einen Einfüllstutzen eines Betriebsmitteltanks derart weiterzubilden, dass auch über eine lange Betriebszeit eine weitgehend gleiche Bedienkraft zum Öffnen und Schließen des Verschlussdeckels gegeben ist.

Die Aufgabe wird erfindungsgemäß nach den Merkmalen des Anspruchs 1 gelöst.

Der Einfüllstutzen ist nach außen zumindest teilweise von einer Abdeckscheibe überdeckt. Die Abdeckscheibe überlappt den Rand des Einfüllstutzens zumindest teilweise. Die Abdeckscheibe selbst ist drehfest mit dem Druckstück der Hubanordnung verbunden, so dass die Abdeckscheibe zusammen mit dem Druckstück um die Nabe drehbar ist. Die Abdeckscheibe deckt einen die Hubanordnung aufnehmenden Zwischenraum des Verschlussdeckels nach außen ab, wozu die Abdeckscheibe den Rand des Einfüllstutzens zumindest teilweise überragt. Da die Hubanordnung innerhalb des Einfüllstutzens liegt und die Abdeckscheibe den Einfüllstutzen über zumindest 70% bis 95% abdeckt, ist der Zwischenraum mit der Hubanordnung gegen Eindringen von Schmutz von außen geschützt. Dadurch kann die Bedienkraft der Hubanordnung auch über einen längeren Betriebszeitraum weitgehend gleich gehalten werden.

Vorteilhaft liegt die Abdeckscheibe über dem äußeren Rand des Einfüllstutzens. In Axialrichtung auf den Einfüllstutzen gesehen überlappen sich die Abdeckscheibe und der Rand des Einfüllstutzens.

Die Abdeckscheibe kann als getrenntes Bauteil gefertigt sein, welches drehfest an dem Druckstück festgelegt ist. Insbesondere ist die Abdeckscheibe einteilig mit dem Druckstück der Hubanordnung ausgebildet.

In Weiterbildung der Erfindung weist die Abdeckscheibe einen Außendurchmesser auf, der vorzugsweise dem Außendurchmesser des Randes des Einfüllstutzens entspricht. Die Anordnung ist so getroffen, dass die Abdeckscheibe in Umfangsrichtung zumindest teilweise den äußeren Rand des Einfüllstutzens überragt. Damit deckt die Abdeckscheibe den Rand des Einfüllstutzens weitgehend vollständig ab. Es kann zweckmäßig sein, wenn der Außendurchmesser der Abdeckscheibe größer ist als der Außendurchmesser des Randes des Einfüllstutzens, z. B. um 2% bis 5% größer ist. Die Abdeckscheibe steht insbesondere über den äußeren Rand des Einfüllstutzens vor.

Zweckmäßig ist der Scheibenrand der Abdeckscheibe im Querschnitt Z-förmig ausgebildet. Der Scheibenrand der Abdeckscheibe weist über zumindest einen Teilumfang eine Umfangswand mit einer axialen Höhe auf. Die Umfangswand steht insbesondere lotrecht zur Ebene der Abdeckscheibe. Der obere Rand der Umfangswand trägt einen Radialflansch, der den äußeren Rand des Einfüllstutzens überragt.

In einer gesicherten Schließstellung des Verschlussdeckels im Einfüllstutzen ragt die Umfangswand über eine Teilhöhe in den Einfüllstutzen ein. Die Anordnung ist so getroffen, dass zwischen dem Scheibenrand der Abdeckscheibe und dem Einfüllstutzen eine Spaltdichtung ausgebildet ist. Vorteilhaft erstreckt sich die Spaltdichtung über zumindest 180° Umfangswinkel, vorzugsweise über 270° Umfangswinkel, insbesondere über 320° Umfangswinkel.

Weitere Merkmale der Erfindung ergeben sich aus den weiteren Ansprüchen, der Beschreibung und der Zeichnung, in der nachfolgend im Einzelnen beschriebene Merkmale eines Ausführungsbeispiels der Erfindung dargestellt sind. Die dargestellten und beschriebenen Merkmale können beliebig miteinander kombiniert werden. Die Zeichnungen zeigen:
- Fig. 1: einen erfindungsgemäßen Verschlussdeckel in Seitenansicht,
- Fig. 2: eine Explosionsdarstellung der einzelnen Bauteile des erfindungsgemäßen Verschlussdeckels nach Fig. 1,
- Fig. 3: einen schematischen Schnitt durch einen Einfüllstutzen eines Betriebsmitteltanks mit einem darin eingesetzten Verschlussdeckel in Offenstellung,
- Fig. 4: einen schematischen Schnitt durch einen Einfüllstutzen eines Betriebsmitteltanks gemäß Fig. 3 mit einem darin eingesetzten Verschlussdeckel in Schließstellung,
- Fig. 5: einen gedrehten schematischen Schnitt durch einen Verschlussdeckel in Schließstellung gemäß Fig. 4,
- Fig. 6: eine Seitenansicht auf den durch einen erfindungsgemäßen Verschlussdeckel verschlossenen Einfüllstutzen eines Betriebsmitteltanks.

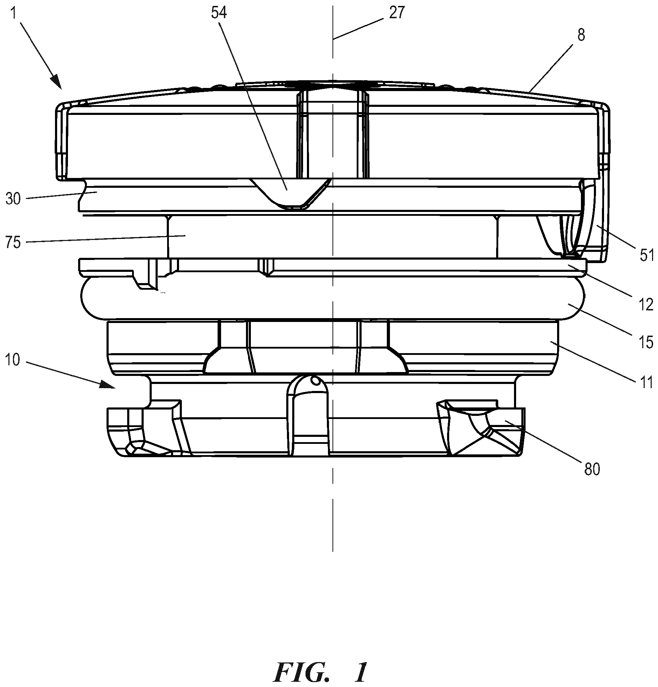

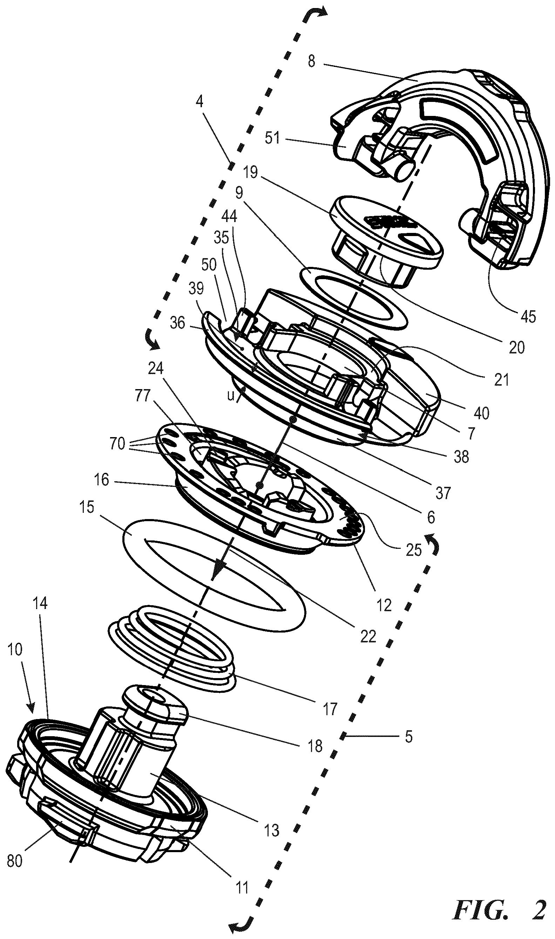

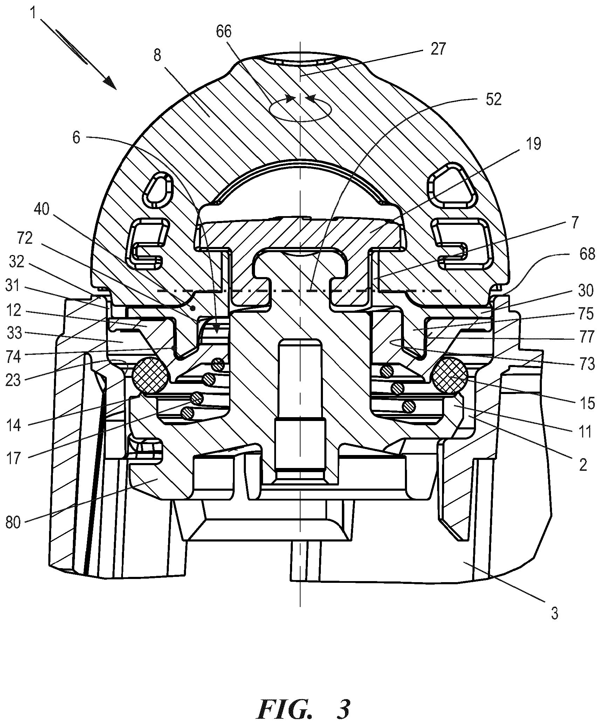

In Fig. 1 ist ein Verschlussdeckel 1 für einen Einfüllstutzen 2 (Fig. 3) eines Betriebsmitteltanks 3 in Seitenansicht gezeigt. Der Verschlussdeckel 1 ist mit seinen einzelnen Bauteilen in der Explosionsdarstellung nach Fig. 2 wiedergegeben.

Der Verschlussdeckel 1 umfasst einen Grundkörper 10 mit einem zentralen Montagedom 13, der die weiteren Bauteile des Verschlussdeckels 1 hält.

Der Grundkörper 10 bildet ein erstes Deckelelement 11, auf dessen Montagedom 13 ein zweites Deckelelement 12 axial verschiebbar gehalten ist. Das erste Deckelelement 11 weist einen Auflagerand 14 für einen Dichtring 15 auf, der im Ausführungsbeispiel als O-Ring ausgebildet ist. Das zweite Deckelement 12 weist einen Konusabschnitt 16 auf, der in montiertem Zustand des Verschlussdeckels 1 in den Dichtring 15 einragt (Fig.3). Zwischen dem ersten Deckelelement 11 und dem zweiten Deckelelement 12 wirkt eine Hubfeder 17, die im Ausführungsbeispiel als konische Spiralfeder gestaltet ist.

Der Montagedom 13 weist an seinem freien Ende einen Montagekopf 18 für ein Haltestück 19 auf.

Der Verschlussdeckel 1 umfasst ferner ein Griffstück 4, welches im Wesentlichen aus einem Druckstück 40 mit einer Nabe 7 und einem drehfest mit der Nabe 7 und dem Druckstück 40 verbundenen Griffhebel 8 besteht. Das Druckstück 40 wird mit der Nabe 7 auf den Montagedom 13 aufgefädelt und zur Sicherung das Haltestück 19 auf den Montagekopf 18 aufgeschoben. Das Griffstück 4 ist so unverlierbar und über einen Teilwinkel drehbar an dem Grundkörper 10 gehalten.

Das Haltestück 19 übergreift zur Sicherung mit einem Rand 20 einen Auflagerand 21 des Druckstücks 40. Zur leichteren Drehbeweglichkeit ist zwischen dem übergreifenden Rand 20 und dem Auflagerand 21 eine Zwischenscheibe 9 angeordnet.

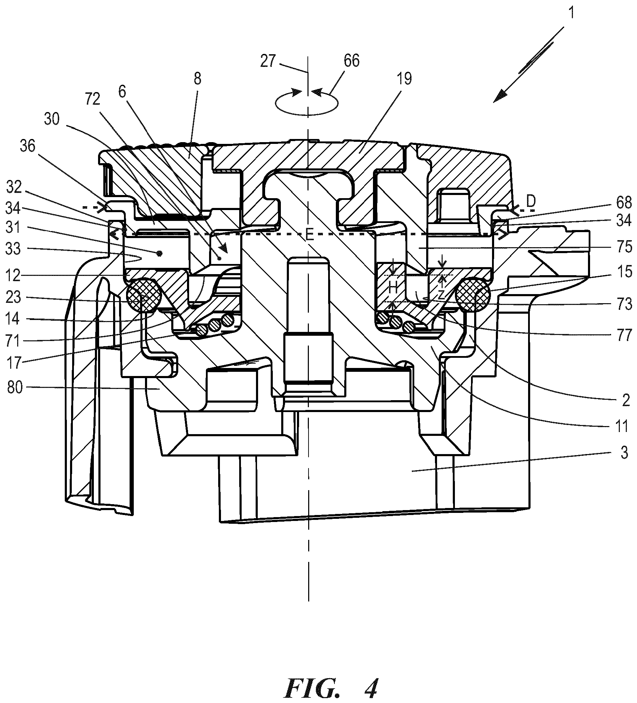

Die Deckelelemente 11 und 12 bilden zusammen mit dem Dichtring 15 und der Hubfeder 17 eine Verschlussvorrichtung 5. Die Verschlussvorrichtung 5 ist durch das Griffstück 4 zu betätigen. Zum Schließen der Verschlusseinrichtung 5 führt das zweite Deckelelement 12 einen axialen Hub H (Fig. 4) in Pfeilrichtung 22 (Fig.2) aus, wodurch der Konusabschnitt 16 in den Dichtring 15 eintaucht und den Dichtring 15 radial aufweitet, bis dieser an einem Dichtrand 23 (Fig. 3) des Einfüllstutzens 2 anliegt. Zur Ausführung des axialen Hubs H in Pfeilrichtung 22 ist eine Hubanordnung 6 vorgesehen, die im gezeigten Ausführungsbeispiel zwischen dem zweiten Deckelelement 12 und der Nabe 7 des Druckstücks 40 angeordnet ist.

Die Hubanordnung 6 besteht im Wesentlichen aus einer Nockenbahn 24, die im gezeigten Ausführungsbeispiel auf der der Nabe 7 zugewandten Stirnseite 25 des zweiten Deckelelementes 12 angeordnet ist. Die Nockenbahn 24 wirkt mit einem nicht näher dargestellten Nocken zusammen, der an der Nabe 7 vorgesehen ist.

An der Nabe 7 ist eine Abdeckscheibe 30 vorgesehen, deren Lage und Funktion den Darstellungen der Figuren 3 bis 6 zu entnehmen ist. Die Abdeckscheibe 30 schützt den Einfüllstutzen 2 vor eindringendem Schmutz. Im weiteren Sinne dichtet die Abdeckscheibe 30 den Einfüllstutzen 2 nach außen ab.

Wie insbesondere Fig. 4 zeigt, überlappt der Scheibenrand 36 der Abdeckscheibe 30 radial den Rand 32 des Einfüllstutzens 2 zumindest teilweise. Zweckmäßig weist die Abdeckscheibe 30 einen Außendurchmesser D auf, der vorteilhaft dem Außendurchmesser E des Einfüllstutzens 2 entspricht. Der Scheibenrand 36 endet an der Außenkante des Randes 32 des Einfüllstutzens. Der Außendurchmesser E des Einfüllstutzens 2 entspricht dem Außendurchmesser E des Randes 32 des Einfüllstutzens 2. Die Ringfläche 68 (Fig. 1) des Randes 32 des Einfüllstutzens 2 wird in Umfangsrichtung des Randes 32 von der Abdeckscheibe 30 über mehr als 189°, vorzugsweise über mehr als 270°, insbesondere über mehr als 330° abgedeckt.

Die Hubanordnung 6 liegt in einem Zwischenraum 31 (Figuren 3, 4) des Verschlussdeckels 1. Dieser Zwischenraum 31 ist radial einerseits durch den Montagedom 13 und andererseits von dem Einfüllstutzen 2 begrenzt. Axial ist der Zwischenraum 31 begrenzt durch das zweite Deckelelement 12 der Verschlussvorrichtung 5 und die an der Nabe 7 vorgesehene Abdeckscheibe 30. Die räumlich zwischen dem zweiten Deckelelement 12 und dem Griffstück 4 angeordnete Abdeckscheibe 30, die den Rand 32 des Einfüllstutzens 2 zumindest teilweise überragt, bildet somit eine äußere Abdichtung. Die den Rand 32 des Einfüllstutzens 2 überlappende Abdeckscheibe 30 dichtet einerseits den Zwischenraum 31 zur Umgebung hin ab und dichtet andererseits zugleich die Öffnung 33 des Einfüllstutzens 2 zur Umgebung hin ab.

Wie aus den Schnittdarstellungen der Figuren 3 bis 5 ersichtlich, ist die Abdeckscheibe 30 drehfest an der Nabe 7 des Druckstücks 40 des Griffstücks 4 gehalten. Die Abdeckscheibe 30 kann ein getrenntes Bauteil sein, das an der Nabe 7 befestigt ist. Vorteilhaft sind die Abdeckscheibe 30 und die Nabe 7 einteilig ausgebildet. Mit dem Rand 32 des Einfüllstutzens 2 bildet die Abdeckscheibe 30 eine Spaltdichtung 34 (Fig. 4). Wie aus den Schnittdarstellungen der Figuren 3 bis 5 sowie der Explosionsdarstellung nach Fig. 2 hervorgeht, ist die Abdeckscheibe 30 als Teilringteller 35 mit einem erhöhten Umfangsrand 38 ausgebildet. Der Umfangsrand 38 erstreckt sich auf der dem Griffhebel 8 zugewandten Seite 39 der Abdeckscheibe 30. Der erhöhte Umfangsrand 38 erstreckt sich zumindest über einen Teilumfang der Abdeckscheibe 30. Der Umfangsrand 38 der Abdeckscheibe 30 weist eine Umfangswand 37 mit einer Höhe u auf, die in geschlossener Stellung des Verschlussdeckels 1 zumindest über eine Teilhöhe innerhalb des Einfüllstutzens 2 liegt.

Im Umfangsrand 38 der Abdeckscheibe 30 ist - im Bereich ihres Außendurchmessers D - zumindest eine Lücke 50 ausgebildet. Der Lücke 50 ist im Rand 32 des Einfüllstutzens 2 eine entsprechend gestaltete Aufnahme zugeordnet. Die Aufnahme dient dem Eingriff eines Sicherungsnockens 51 (Fig. 1), der am Griffhebel 8 angeordnet ist. In der in Fig. 3 gezeigten Betätigungsstellung des Griffhebels 8 ist dieser um eine Verschwenkachse 52 des Griffstücks 4 um 90° hochgeschwenkt. Dabei tritt der Sicherungsnocken 51 aus der Aufnahme im Rand 32 des Einfüllstutzens 2 aus und lässt eine Drehbewegung des Griffstücks 4 - auch zusammen mit dem Grundkörper 10 - um eine Drehachse 27 (Fig. 1) des Griffstücks 4 zu.

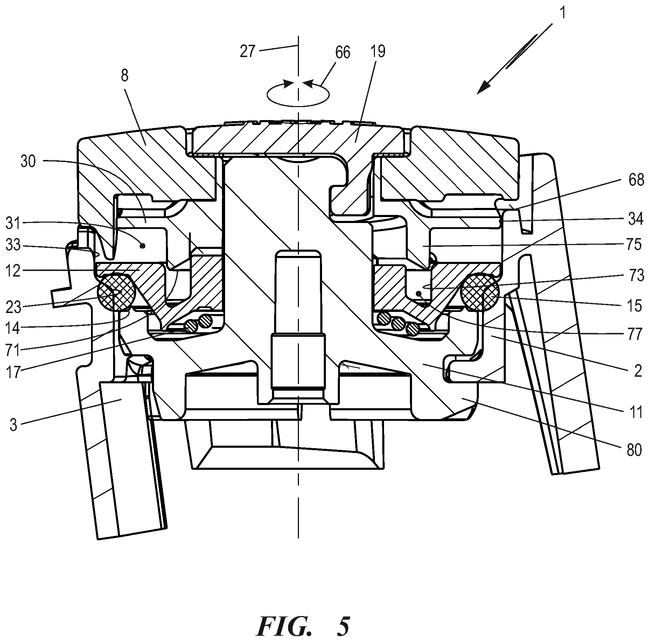

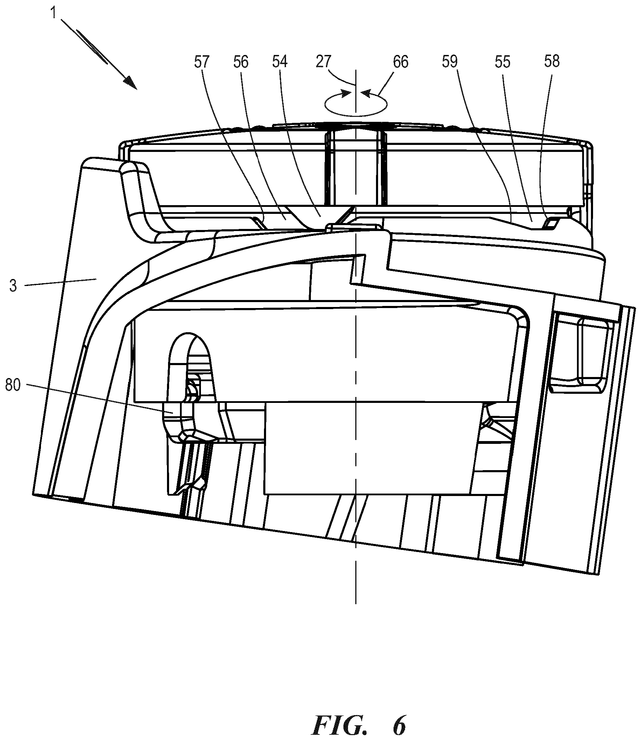

Zum Öffnen des Verschlussdeckels 1 wird der Griffhebel 8 aus der waagrechten Lage nach den Figuren 4 und 5 in eine senkrechte Lage nach Fig. 3 um 90° hochgeschwenkt. Dabei kommt der Sicherungsnocken 51 aus der Aufnahme am Einfüllstutzen 2 frei, so dass ein Drehen des Griffstücks 4 relativ zum Grundkörper 10 möglich ist. Um das Griffstück 4 drehen zu können, muss ein am Druckstück 40 vorgesehenes Druckelement 54 (Fig. 6) aus einer Rastvertiefung 55 im Rand 32 des Einfüllstutzens 2 herausgedreht werden, wozu die Rastvertiefung 55 eine in Öffnungsdrehrichtung vordere Flanke 57 mit geringer Steigung aufweist.

Beim weiteren Drehen um die Drehachse 27 in eine Öffnungsrichtung gemäß Pfeilrichtung 66 in Fig. 6 fährt das Druckelement 54 auf seinem Drehweg in die Öffnungsstellung in die mit einem Drehabstand zur ersten Rastvertiefung 55 liegende zweite Rastvertiefung 56 ein. Die Rastvertiefung 56 hat eine in Drehrichtung steile Flanke 58, so dass das Druckelement 54 für den Benutzer spürbar anschlägt und die Öffnungsbewegung behindert. Dadurch ist die Möglichkeit gegeben, dass ein Überdruck im Betriebsmitteltank 3 abgebaut wird, bevor der Verschlussdeckel 1 vollständig geöffnet wird.

Um einen Druckabbau während des Öffnens des Verschlussdeckels 1 zu ermöglichen, weist das obere, zweite Deckelelement 12 Durchgangsöffnungen 70 auf. Die Durchgangsöffhungen 70 münden in den Zwischenraum 31.

Wie z. B. die Figuren 3 bis 5 zeigen, weist das obere, zweite Deckelelement 12 eine Ringnut 77 auf, die die Nockenbahn 24 der Hubanordnung 6 umschließt. Die Nockenbahn 24 liegt somit - wie auch in Fig. 3 zu sehen - innerhalb des durch die Ringnut 77 begrenzten Raums.

Die dem Deckelelement 12 zugewandte Nabe 7 des Druckstücks 40 des Griffstücks 4 weist als axiale Verlängerung eine zylindrische Umfangswand 75 auf, die zum Eingriff in die Ringnut 77 ausgebildet ist. In der durch die Umfangswand 75 umschlossenen Ringfläche der Nabe 7 liegen die Nocken des Druckstücks 40, die mit der Nockenbahn 24 des zweiten Deckelelementes 12 zusammenwirken und Teil der Hubanordnung 6 bilden.

In der Öffnungsstellung gemäß Fig. 3 ist die Umfangswand 75 axial vollständig in die Ringnut 77 eingetaucht. Die Umfangswand 75 ist in der Ringnut 77 aufgenommen. In der Schließstellung gemäß den Figuren 4 und 5 ist die Umfangswand 75 bis auf einen Resthub aus der Ringnut 77 ausgefahren. In der Öffnungsstellung gemäß den Figuren 4 und 5 verbleibt zwischen der Nutwand 73 und dem Ende 71 der Umfangswand 75 eine Überdeckung z. Sowohl in der Schließstellung gemäß den Figuren 4 und 5 als auch in der Öffnungsstellung gemäß der Fig. 3 ist so eine Spaltdichtung ausgebildet, die die Hubanordnung 6 gegen Schmutzeintritt schützt.

Im gezeigten Ausführungsbeispiel liegt die Hubanordnung 6 in dem Zwischenraum 31 zwischen dem zweiten Dichtelement 12 und dem Druckstück 40. Die Spaltdichtung 74 dichtet einen Nockenraum 72 ab, der einen Teil des Zwischenraums 31 bildet. Der Nockenraum 72 ist somit einerseits über die Spaltdichtung 74 und andererseits über die Abdeckscheibe 30 gegen den Eintritt von Schmutz geschützt.

Zum Verschließen des Einfüllstutzens 2 eines Betriebsmitteltanks 3 wird der Verschlussdeckel 1 in Öffnungsstellung der Verschlussvorrichtung 5 in den Einfüllstutzen 2 eingesetzt. Durch im Einfüllstutzen 2 vorgesehene Zapfen kann der Grundkörper 10 nur in einer ausgerichteten Drehstellung axial in den Einfüllstutzen 2 eingesetzt werden.

Die zum Einsetzen erforderliche Drehlage des Verschlussdeckels 1 ist optisch durch eine Markierung an der Abdeckscheibe 30 zu erkennen.

Ist der Verschlussdeckel in den Einfüllstutzen 2 abgesenkt, wird das Griffstück 4 mit dem Griffhebel 8 um die Drehachse 27 in Schließrichtung gedreht, wobei Verschlusselemente 80 des Grundkörpers 10 mit nicht näher dargestellten Fortsätzen im Einfüllstutzen 2 zusammenwirken. Liegt der Grundkörper 10 in einer drehfesten Endlage, wird das Griffstück 4 relativ zum Grundkörper 10 gedreht, wobei die Nocken des Druckstückes 40 auf den Nockenbahnen 24 des zugewandten zweiten Deckelelementes 12 aufgleiten. Dadurch bewegt sich das zweite Deckelelement 12 in Pfeilrichtung 22 um einen Hub H, so dass der Konusabschnitt 16 des Deckelelementes 12 in den Dichtring 15 eintaucht. Dadurch wird der Dichtring 15 radial aufgeweitet und legt sich an den Dichtrand 23 im Einfüllstutzen 2 an. Beim weiteren Drehen um die Drehachse 27 in Schließrichtung gelangt das Druckelement 54 zunächst in die erste Rastvertiefung 56 im Rand 32 des Einfüllstutzens 2. Diese erste Rastvertiefung 56 hat eine in Schließrichtung schwach ansteigende Flanke 59, so dass für den Benutzer ein einfaches Weiterdrehen in Schließrichtung möglich ist. Das Druckelement 54 gleitet weiter, bis es in die Rastvertiefung 55 einrastet, wodurch die Endstellung der Drehlage in Schließrichtung erreicht ist. Der Sicherungsnocken 51 kann nun beim Abklappen des Griffhebels 8 in die Horizontale in die Aufnahme im Rand des Einfüllstutzens eintauchen. Der Betriebsmittelbehälter 3 ist dicht verschlossen.

Das zweite Deckelelement 12 ist relativ zum Grundkörper 10, also dem ersten Deckelelement 11, drehfest gesichert, damit bei einer Relativverdrehung des Griffstücks 4 zum Grundkörper 10 der Nocken des Druckstücks 40 auf der Nockenbahn 24 aufgleiten kann.

In Weiterbildung der Erfindung ist ferner vorgesehen, dass die Abdeckscheibe 30 zumindest eine Rastnase 44 trägt, die den schwenkbaren Griffhebel 8 in Schließstellung verrastet. Die Rastnase 44 erstreckt sich in Offenstellung des Griffhebels 8 parallel zum Griffhebel 8. Die Rastnase 44 steht senkrecht auf der Ebene der Abdeckscheibe 30. Die Rastnase 44 greift in eine Rastausnehmung 45 im Griffhebel 8 ein. Die Rastnase 44 sichert einerseits die in Fig. 3 gezeigte Offenstellung des Griffhebels 8 und andererseits die in Fig. 4 gezeigte Schließstellung des Griffhebels 8.

## Patentansprüche

1. Verschlussdeckel für einen Betriebsmitteltank (3), insbesondere für einen Kraftstofftank, mit einer in einen Einfüllstutzen (2) des Betriebsmitteltanks einragenden Verschlussvorrichtung (5) aus einem ersten Deckelelement (11) und einem zweiten Deckelelement (12), und mit einem zwischen den Deckelelementen (11, 12) angeordneten Dichtungsring (15), wobei die Deckelelemente (11, 12) zum Öffnen und Schließen des Einfüllstutzens (2) über eine Hubanordnung (6) um einen Hub (H) axial gegeneinander bewegbar sind, und mit einem um eine Nabe (7) drehbaren Griffstück (4) zur Betätigung der Hubanordnung (6), wobei die Hubanordnung (6) ein Druckstück (40) aufweist, welches axial auf ein Deckelelement (12) wirkt,
**dadurch gekennzeichnet, dass** der Einfüllstutzen (2) nach außen zumindest teilweise von einer Abdeckscheibe (30) überdeckt ist, dass die Abdeckscheibe (30) drehfest mit dem Druckstück (40) der Hubanordnung (6) verbunden ist, und dass die Abdeckscheibe (30) zusammen mit dem Druckstück (40) um die Nabe (7) drehbar ist.

2. Verschlussdeckel nach Anspruch 1,
**dadurch gekennzeichnet, dass** die Abdeckscheibe (30) über dem äußeren Rand (32) des Einfüllstutzens (2) liegt,

3. Verschlussdeckel nach Anspruch 1,
**dadurch gekennzeichnet, dass** die Abdeckscheibe (30) einteilig mit dem Druckstück (40) der Hubanordnung (6) ausgebildet ist.

4. Verschlussdeckel nach Anspruch 1,
**dadurch gekennzeichnet, dass** die Abdeckscheibe (30) einen Außendurchmesser (D) aufweist, der dem Außendurchmesser (E) des Randes (32) des Einfüllstutzens (2) entspricht.

5. Verschlussdeckel nach Anspruch 1,
**dadurch gekennzeichnet, dass** die Abdeckscheibe (30) zumindest teilweise den äußeren Rand (32) des Einfüllstutzens (2) überragt.

6. Verschlussdeckel nach Anspruch 1,
**dadurch gekennzeichnet, dass** die Abdeckscheibe (30) einen im Querschnitt Z-förmigen Scheibenrand (36) aufweist.

7. Verschlussdeckel nach Anspruch 1,
**dadurch gekennzeichnet, dass** der Scheibenrand (36) der Abdeckscheibe (30) über zumindest einen Teilumfang eine Umfangswand (37) mit einer axialen Höhe (u) aufweist.

8. Verschlussdeckel nach Anspruch 7,
**dadurch gekennzeichnet, dass** in einer Schließstellung des Verschlussdeckels (1) die Umfangswand (37) über eine Teilhöhe in den Einfüllstutzen (2) einragt.

9. Verschlussdeckel nach Anspruch 7,
**dadurch gekennzeichnet, dass** zwischen der Abdeckscheibe (30) und dem Einfüllstutzen (1) eine Spaltdichtung (34) ausgebildet ist.

10. Verschlussdeckel nach Anspruch 9,
**dadurch gekennzeichnet, dass** sich die Spaltdichtung (34) über zumindest 180° Umfangswinkel, vorzugsweise über 270° Umfangswinkel, insbesondere über 320° Umfangswinkel erstreckt.

11. Verschlussdeckel nach Anspruch 1,
**dadurch gekennzeichnet, dass** die Abdeckscheibe (30) zumindest eine Rastnase (44) trägt, die den schwenkbaren Griffhebel (8) in einer Schließstellung verrastet.

12. Verschlussdeckel nach Anspruch 11,
**dadurch gekennzeichnet, dass** sich die Rastnase (44) in Offenstellung des Griffhebels (8) parallel zum Griffhebel (8) erstreckt.

13. Verschlussdeckel nach Anspruch 11,
**dadurch gekennzeichnet, dass** die Rastnase (44) in der Schließstellung des Griffhebels (8) in eine Rastausnehmung (45) im Griffhebel (8) eingreift.

## Claims

1. Closure cap for an operating medium tank (3), in particular for a fuel tank, having a closure device (5), which projects into a filler neck (2) of the operating medium tank and is composed of a first cap element (11) and a second cap element (12), and having a seal ring (15), which is arranged between the cap elements (11, 12), wherein, for the purpose of opening and closing the filler neck (2), the cap elements (11, 12) are movable axially relatively to one another by a lift (H) via a lifting arrangement (6), and having a grip piece (4), which is rotatable around a hub (7) and serves for actuating the lifting arrangement (6), wherein the lifting arrangement (6) has a pressure piece (40) which acts axially on a cap element (12),
**characterized in that** the filler neck (2) is covered at least partially by a cover disc (30) in the outward direction, **in that** the cover disc (30) is connected in a rotationally conjoint manner to the pressure piece (40) of the lifting arrangement (6), and **in that** the cover disc (30) is rotatable, together with the pressure piece (40), around the hub (7).

2. Closure cap according to claim 1,
**characterized in that** the cover disc (30) is situated above the outer rim (32) of the filler neck (2).

3. Closure cap according to claim 1,
**characterized in that** the cover disc (30) is formed integrally with the pressure piece (40) of the lifting arrangement (6).

4. Closure cap according to claim 1,
**characterized in that** the cover disc (30) has an outer diameter (D) which corresponds to the outer diameter (E) of the rim (32) of the filler neck (2).

5. Closure cap according to claim 1,
**characterized in that** the cover disc (30) at least partially projects beyond the outer rim (32) of the filler neck (2).

6. Closure cap according to claim 1,
**characterized in that** the cover disc (30) has a disc edge (36) which is Z-shaped in cross section.

7. Closure cap according to claim 1,
**characterized in that** the disc edge (36) of the cover disc (30) has, over at least a part of the circumference, a circumferential wall (37) with an axial height (u).

8. Closure cap according to claim 7,
**characterized in that**, in a closed position of the closure cap (1), the circumferential wall (37) projects over a part of the height into the filler neck (2).

9. Closure cap according to claim 7,
**characterized in that** a gap seal (34) is formed between the cover disc (30) and the filler neck (1).

10. Closure cap according to claim 9,
**characterized in that** the gap seal (34) extends over a circumferential angle of at least 180°, preferably over a circumferential angle of 270°, in particular over a circumferential angle of 320°.

11. Closure cap according to claim 1,
**characterized in that** the cover disc (30) bears at least one detent lug (44) which locks the pivotable grip lever (8) in a closed position.

12. Closure cap according to claim 11,
**characterized in that** the detent lug (44), in the open position of the grip lever (8), extends parallel to the grip lever (8).

13. Closure cap according to claim 11,
**characterized in that** the detent lug (44), in the closed position of the grip lever (8), engages into a detent recess (45) in the grip lever (8).

## Revendications

1. Couvercle de fermeture pour un réservoir de fluide d'opération (3), en particulier pour un réservoir de carburant, comprenant un dispositif de fermeture (5) pénétrant dans une tubulure de remplissage (2) du réservoir de fluide d'opération, constitué d'un premier élément de couvercle (11) et d'un deuxième élément de couvercle (12), et une bague d'étanchéité (15) disposée entre les éléments de couvercle (11, 12), les éléments de couvercle (11, 12), pour ouvrir et fermer la tubulure de remplissage (2), pouvant être déplacés axialement l'un par rapport à l'autre d'une certaine course (H) par le biais d'un agencement de levage (6), et une pièce de préhension (4) pouvant tourner autour d'un moyeu (7) pour actionner l'agencement de levage (6), l'agencement de levage (6) présentant une pièce de pression (40) qui agit axialement sur un élément de couvercle (12), **caractérisé en ce que** la tubulure de remplissage (2) est recouverte vers l'extérieur au moins en partie par un disque de recouvrement (30), **en ce que** le disque de recouvrement (30) est connecté de manière solidaire en rotation à la pièce de pression (40) de l'agencement de levage (6) et **en ce que** le disque de recouvrement (30) peut tourner autour du moyeu (7) conjointement avec la pièce de pression (40).

2. Couvercle de fermeture selon la revendication 1,
**caractérisé en ce que** le disque de recouvrement (30) est situé au-dessus du bord extérieur (32) de la tubulure de remplissage (2).

3. Couvercle de fermeture selon la revendication 1,
**caractérisé en ce que** le disque de recouvrement (30) est réalisé d'une seule pièce avec la pièce de pression (40) de l'agencement de levage (6).

4. Couvercle de fermeture selon la revendication 1,
**caractérisé en ce que** le disque de recouvrement (30) présente un diamètre extérieur (D) qui correspond au diamètre extérieur (E) du bord (32) de la tubulure de remplissage (2).

5. Couvercle de fermeture selon la revendication 1,
**caractérisé en ce que** le disque de recouvrement (30) dépasse au moins en partie du bord extérieur (32) de la tubulure de remplissage (2).

6. Couvercle de fermeture selon la revendication 1,
**caractérisé en ce que** le disque de recouvrement (30) présente un bord de disque (36) de section transversale en forme de Z.

7. Couvercle de fermeture selon la revendication 1,
**caractérisé en ce que** le bord de disque (36) du disque de recouvrement (30) présente sur au moins une périphérie partielle une paroi périphérique (37) de hauteur axiale (u).

8. Couvercle de fermeture selon la revendication 7,
**caractérisé en ce que** dans une position de fermeture du couvercle de fermeture (1), la paroi périphérique (37) pénètre sur une hauteur partielle dans la tubulure de remplissage (2).

9. Couvercle de fermeture selon la revendication 7,
**caractérisé en ce qu'**entre le disque de recouvrement (30) et la tubulure de remplissage (1) est réalisé un joint d'étanchéité à fente (34).

10. Couvercle de fermeture selon la revendication 9,
**caractérisé en ce que** le joint d'étanchéité à fente (34) s'étend sur un angle périphérique d'au moins 180°, de préférence sur un angle périphérique de 270°, en particulier sur un angle périphérique de 320°.

11. Couvercle de fermeture selon la revendication 1,
**caractérisé en ce que** le disque de recouvrement (30) porte au moins un ergot d'encliquetage (44) qui encliquète le levier de préhension pivotant (8) dans une position de fermeture.

12. Couvercle de fermeture selon la revendication 11,
**caractérisé en ce que** l'ergot d'encliquetage (44), dans la position d'ouverture du levier de préhension (8), s'étend parallèlement au levier de préhension (8).

13. Couvercle de fermeture selon la revendication 11,
**caractérisé en ce que** l'ergot d'encliquetage (44), dans la position de fermeture du levier de préhension (8), s'engage dans un évidement d'encliquetage (45) dans le levier de préhension (8).
